(19) Europäisches Patentamt
European Patent Office
Office européen des brevets

(11) Veröffentlichungsnummer: **0 509 271 A2**

(12) # EUROPÄISCHE PATENTANMELDUNG

(21) Anmeldenummer: **92105022.5**

(22) Anmeldetag: **24.03.92**

(51) Int. Cl.[5]: **C08G 65/32**, C08G 65/20, C08G 18/61, C08G 18/50

(30) Priorität: **15.04.91 DE 4112271**

(43) Veröffentlichungstag der Anmeldung: **21.10.92 Patentblatt 92/43**

(84) Benannte Vertragsstaaten: **BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Koehler, Ulrich, Dr.**
**Werderstrasse 48**
**W-6900 Heidelberg(DE)**
Erfinder: **Hickmann, Eckhard, Dr.**
**Kantstrasse 23**
**W-6701 Dannstadt-Schauernheim(DE)**
Erfinder: **Siegel, Hardo, Dr.**
**Hans-Purrmann-Allee 25**
**W-6720 Speyer(DE)**
Erfinder: **Becker, Johannes, Dr.**
**Ruedigerstrasse 124**
**W-6700 Ludwigshafen(DE)**

(54) **Siloxi-Polytetrahydrofurane.**

(57) Neue Siloxi-Polytetrahydrofurane der Formel I

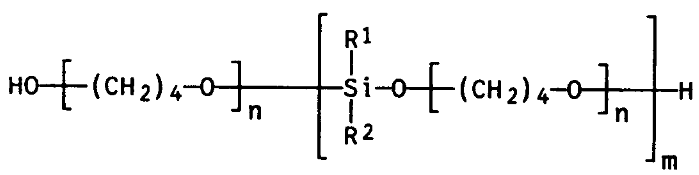

I

in der die Reste $R^1$ und $R^2$ gleich oder verschieden sind und für eine $C_1$- bis $C_{10}$-Alkylgruppe, eine $C_2$- bis $C_{10}$-Alkenylgruppe, eine $C_1$- bis $C_{10}$-Halogenalkylgruppe, eine $C_1$- $C_{10}$-Aminoalkylgruppe, eine $C_1$- bis $C_{10}$-Hydroxyalkylgruppe, eine $C_6$- bis $C_{10}$-Arylgruppe, eine $C_7$- bis $C_{12}$-Aralkylgruppe und/oder eine $C_1$- bis $C_{10}$-Alkoxygruppe stehen, der Index n eine ganze Zahl von 2 bis 150 und der Index m eine ganze Zahl von 1 bis 500 ist, sowie ein Verfahren zu deren Herstellung.

EP 0 509 271 A2

Unter Polytetrahydrofuranen (Poly-THF) oder Polyoxibutylenglykolen versteht man Verbindungen der allgemeinen Formel II

$$HO\left[(CH_2)_4-O\right]_nH \qquad II$$

Poly-THF wird in der Regel durch die kationische Polymerisation von Tetrahydrofuran (THF) hergestellt, wobei Brönstedt- oder Lewissäuren als Katalysatoren verwendet werden können. Die Herstellung von Poly-THF wird beispielsweise in DE-A 28 01 792, EP-A 241 890 und EP-A 126 471 beschrieben. Der Polymerisationsgrad n des Poly-THF's gibt die Anzahl der aus dem monomeren THF stammenden Oxi-butan-1,4-diyl-Einheiten pro Poly-THF-Molekül an und kann einen Wert von 3 - entsprechend einem mittleren Molgewicht $\overline{MG}$ von 234 Dalton - bis etwa 70 - entsprechend einem mittleren Molekulargewicht $\overline{MG}$ von etwa 5000 Dalton - haben. Höhere Polymerisationsgrade sind möglich, jedoch sind solche Poly-THF-Species von geringerer technischer Bedeutung. Bei der THF-Polymerisation entstehen im allgemeinen Poly-THF-Moleküle unterschiedlicher Kettenlänge, also unterschiedlichen Polymerisationsgrades, weshalb das bei der Polymerisation gebildete Poly-THF keine einheitliche Verbindung, sondern eine je nach seiner Herstellungsart mehr oder weniger breite, statistische Mischung aus Poly-THF-Individuen unterschiedlichen Molekulargewichts darstellt. Das experimentell ermittelte Molekulargewicht des Poly-THF's ist somit eine statistische Größe und wird hier und im folgenden als "mittleres Molekulargewicht ($\overline{MG}$)" oder als "mittlere Molmasse" bezeichnet. Das mittlere Molekulargewicht $\overline{MG}$ des Poly-THF's kann nach verschiedenen Methoden, beispielsweise mittels Osmometrie, Gelpermeationschromatographie oder über die Bestimmung der Hydroxyl-Endgruppen ermittelt werden.

Poly-THF wird als Diol-Baustein zur Herstellung hochwertiger Polyurethane verwendet und beeinflußt als solcher entscheidend die Eigenschaften der daraus hergestellten Polymere. Die auf der Verwendung von Poly-THF als Diol-Baustein beruhenden Eigenschaften dieser Polymere, wie hohe Schlagzähigkeit, hohes mechanisches Niveau ohne Temperung, werden nicht allein von der Menge des zur Polymerherstellung eingesetzten Poly-THF's bestimmt, sondern in wesentlichem Maße auch von der Art des verwendeten Poly-THF. So weichen die elastischen Eigenschaften Bruchdehnung und Schlagzähigkeit eines unter Verwendung von Poly-THF eines mittleren Molekulargewichts von 2000 Dalton hergestellten Polyurethans beispielsweise deutlich von denen eines Polyurethans ab, das unter ansonsten gleichen Bedingungen unter Zusatz von Poly-THF einer mittleren Molmasse von 1000 Dalton produziert wurde. Von besonderem wirtschaftlichen Interesse sind z. B. die folgenden Poly-THF-Sorten: Poly-THF 250 ($\overline{MG}$: ca. 250 Dalton, n (Polymerisationsgrad): ca. 3); Poly-THF 650 ($\overline{MG}$: ca. 650 Dalton, n: ca. 9); Poly-THF 1000 ($\overline{MG}$: ca. 1000 Dalton, n: ca. 14); Poly-THF 2000 ($\overline{MG}$: ca. 2000 Dalton, n: ca. 27); Poly-THF 2900 ($\overline{MG}$: ca. 2900 Dalton, n: ca. 40) und Poly-THF 4500 ($\overline{MG}$: ca. 4500 Dalton, n: ca. 62).

Polytetrahydrofurane mit höheren mittleren Molekulargewichten haben in der Regel eine deutlich höhere Viskosität und ihr Erweichungspunkt liegt im allgemeinen bei deutlich höheren Temperaturen als dies bei Polytetrahydrofuranen mit relativ niedrigem mittlerem Molekulargewicht der Fall ist. Beispielsweise beträgt die Temperatur beim Erweichungspunkt von Poly-THF 250 -14 °C, wohingegen dieser bei Poly-THF 1000 bereits bei 26 °C liegt und die Viskosität Poly-THF 250 hat einen Wert von 158 mPa • s (bei 20 °C), dieweil die Viskosität von Poly-THF 1000 sogar bei einer Temperatur von 30 °C mit 440 mPa • s noch fast doppelt so hoch ist. In Anbetracht dieser Sachverhalte wird deutlich, daß höhermolekulare Poly-Tetrahydrofurane schwieriger und mit einem höheren Aufwand handzuhaben, zu dosieren und zu verarbeiten sind als niedermolekulare Vertreter dieser Polymere.

Da sich nun aber Polyurethane, welche langkettiges, hochmolekulares Poly-THF als Diol-Baustein enthalten, durch ein besonders günstiges Tieftemperaturverhalten auszeichnen, besteht ein Bedarf nach chemisch modifizierten Poly-Tetrahydrofuranen, die nicht nur die Funktion der herkömmlichen Poly-Tetrahydrofurane als Diol-Baustein und Weichsegment in Polyurethanen übernehmen und ausfüllen können, sondern sich zusätzlich durch bessere Verarbeitungseigenschaften auszeichnen. Des weiteren wäre es außerordentlich wünschenswert, wenn sich als Folge der Verwendung solcher Poly-THF-Derivate auch noch eine verbesserte Verarbeitbarkeit der daraus hergestellten Polymere erzielen ließe.

Der vorliegenden Erfindung lag somit die Aufgabe zugrunde, Poly-THF-Derivate zu finden, welche einesteils die Funktion herkömmlicher Polytetrahydrofurane als Diol-Baustein in Polyurethanen übernehmen und ausfüllen können, sich aber andernteils gegenüber herkömmlichen Polytetrahydrofuranen durch eine verbesserte Verarbeitbarkeit unterscheiden sollten und außerdem noch dem daraus hergestellten Polymerprodukt verbesserte Eigenschaften, wie eine einfachere Verarbeitbarkeit, verleihen sollten. Des weiteren war

ein Verfahren zur Herstellung solcher Poly-THF-Derivate zur Verfügung zu stellen.

Dementsprechend wurden die neuen Siloxi-Polytetrahydrofurane der Formel I

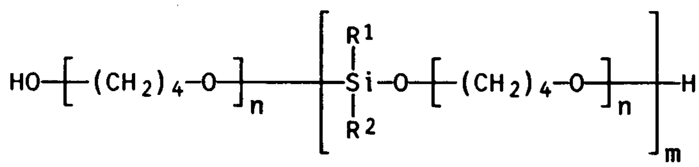

I

in der die Reste $R^1$ und $R^2$ gleich oder verschieden sind und für eine $C_1$- bis $C_{10}$-Alkylgruppe, eine $C_2$- bis $C_{10}$-Alkenylgruppe, eine $C_1$- bis $C_{10}$-Halogenalkylgruppe, eine $C_1$- $C_{10}$-Aminoalkylgruppe, eine $C_1$- bis $C_{10}$-Hydroxyalkylgruppe, eine $C_6$- bis $C_{10}$-Arylgruppe, eine $C_7$- bis $C_{12}$-Aralkylgruppe und/oder eine $C_1$- bis $C_{10}$-Alkoxygruppe, der Index n eine ganze Zahl von 2 bis 150 und der Index m eine ganze Zahl von 1 bis 500 ist, gefunden.

Des weiteren wurde ein Verfahren zur Herstellung von Siloxi-Polytetrahydrofuranen der Formel I

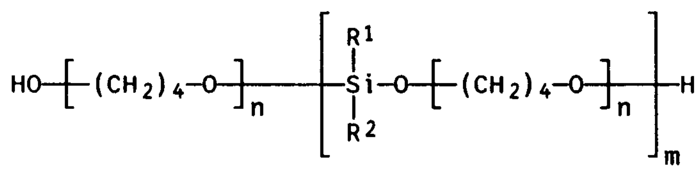

I

in der die Reste $R^1$ und $R^2$ sowie die Indices n und m die obengenannte Bedeutung haben, gefunden, das dadurch gekennzeichnet ist, daß man Polytetrahydrofuran der allgemeinen Formel II

$$HO-[(CH_2)_4-O]_n-H \qquad II$$

mit einer Siliciumverbindung der allgemeinen Formel III

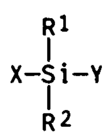

III,

in der die Gruppen X und Y gleich oder verschieden sind und für ein Wasserstoffatom, ein Halogenatom, eine $C_1$- bis $C_4$-Alkoxygruppe und/oder eine $C_2$- bis $C_8$-Dialkylaminogruppe stehen, in An- oder Abwesenheit eines sauren oder basischen Katalysators umsetzt und dabei ein Molverhältnis von Polytetrahydrofuran II:Siliciumverbindung III von 1:1 bis 2:1 anwendet.

Außerdem wurden neue Polyurethane, aufgebaut aus Diisocyanaten, Diolen und gegebenenfalls Diaminen, enthaltend als Diol-Baustein Gruppen der Formel Ia

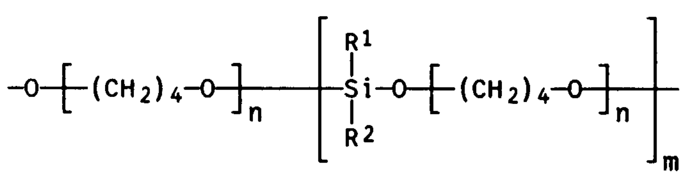

Ia

in der die Reste $R^1$ und $R^2$ sowie die Indices n und m die oben angegebene Bedeutung haben, gefunden.

Die erfindungsgemäßen Siloxi-Polytetrahydrofurane sind also aus mindestens vier Poly-THF-Einheiten, welche über mindestens eine Siloxi-Brücke miteinander verbunden sind, aufgebaute Moleküle. Die erfindungsgemäßen Siloxi-Polytetrahydrofurane können aber auch aus bis zu 501 Poly-THF-Einheiten und aus bis zu 500 Siloxi-Einheiten aufgebaut sein, dann nämlich, wenn der Index m die Zahl 500 hat. Vorzugsweise werden aber Siloxi-Polytetrahydrofurane hergestellt und verwendet, in denen der Index m einen ganzzahligen Wert von 1 bis 20 hat.

Der Index n der Polytetrahydrofuran-Einheiten, welcher auch als Polymerisationsgrad bezeichnet wird, kann einen ganzzahligen Wert von 2 bis 150 haben. Unter den erfindungsgemäßen Verbindungen sind aber solche bevorzugt, in denen n einen ganzzahligen Wert von 3 bis 70 hat. Da die zur Herstellung der erfindungsgemäßen Verbindungen verwendeten Polytetrahydrofurane bestimmter mittlerer Molekulargewichte in der Regel aus einer statistischen Mischung individueller Poly-THF-Makromoleküle unterschiedlichen Molekulargewichts bestehen, also polydisperse Systeme sind, ergibt sich naturgemäß, daß der Index n der einzelnen Poly-THF-Einheiten in den erfindungsgemäßen Verbindungen entsprechend dem verwendeten Ausgangsmaterial variiert und daß die aus derartigen polydispersen Ausgangsmaterialien erzeugten Siloxi-Polytetrahydrofurane ebenfalls polydisperse Systeme sind.

Die Reste $R^1$ und $R^2$ der Siloxi-Gruppierungen können gleich oder verschieden sein und für eine $C_1$- bis $C_{10}$-Alkylgruppe, vorzugsweise eine Methylgruppe, eine $C_2$- bis $C_{10}$-Alkenylgruppe, vorzugsweise eine Vinyl- oder Allylgruppe, eine $C_1$- bis $C_{10}$-, vorzugsweise eine $C_1$- bis $C_4$-Halogenalkylgruppe, eine $C_1$- bis $C_{10}$-, vorzugsweise eine $C_1$- bis $C_4$-Aminoalkylgruppe, eine $C_1$- bis $C_{10}$-, vorzugsweise eine $C_1$- bis $C_4$-Hydroxyalkylgruppe eine $C_6$- bis $C_{10}$-Arylgruppe, vorzugsweise eine Phenylgruppe, eine $C_7$- bis $C_{12}$-Aralkylgruppe, vorzugsweise eine Benzylgruppe und/oder eine $C_1$- bis $C_{10}$-, vorzugsweise eine $C_1$- bis $C_4$-Alkoxygruppe stehen. Siloxi-Polytetrahydrofurane, in denen die Reste $R^1$ und $R^2$ funktionelle Gruppen, wie Hydroxygruppen, Aminogruppen und Halogenatome, tragen, können vorteilhaft zur Herstellung hochvernetzter bzw. funktionalisierter Polyurethane Einsatz finden.

Die Siloxi-Polytetrahydrofurane können erfindungsgemäß durch die Umsetzung Polytetrahydrofuranen der allgemeinen Formel II

$$HO-[(CH_2)_4-O]_n-H \qquad II$$

mit einer Siliciumverbindung der allgemeinen Formel III

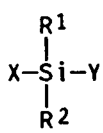

III

hergestellt werden.

In den Silylenverbindungen der Formel III können die Gruppen X und Y gleich oder verschieden sein, zweckmäßigerweise sind sie gleich, und für ein Wasserstoffatom, das in der Regel anionischen Charakter hat und demzufolge auch als Hydridogruppe bezeichnet werden könnte, ein Halogenatom, vorzugsweise ein Fluor-, Chlor- oder Bromatom, eine $C_1$- bis $C_4$-Alkoxygruppe, bevorzugt für die Methoxygruppe und/oder eine $C_2$- bis $C_8$-Dialkylaminogruppe, vorzugsweise für die Dimethylaminogruppe, stehen. Als Dialkylaminogruppen können auch cycloaliphatische sekundäre Aminogruppen mit 2 bis 5 Kohlenstoffatomen im Ring, die gegebenenfalls noch ein Sauerstoffatom im Ring enthalten können, beispielsweise die Aziridino-, Pyrrolidino-, Piperidino- oder Morpholinogruppe, für X und/oder Y stehen. Die Reste $R^1$ und $R^2$ dieser Silylenverbindungen haben die bereits erwähnte Bedeutung. Solche Silylenverbindungen sind im Handel erhältlich oder können nach bekannten Verfahren, beispielsweise nach Comprehensive Organometallic Chemistry, Vol. 2, S. 306-322, Pergamon Press, New York 1982 hergestellt werden.

Die Umsetzung zwischen den Polytetrahydrofuranen II und den Silylenverbindungen III kann in An- oder Abwesenheit von Katalysatoren durchgeführt werden, wobei im Falle der Benutzung von Katalysatoren, je nach der Natur der verwendeten Silylenverbindungen, saure, basische oder Übergangsmetall-Katalysatoren eingesetzt werden.

Werden halogenierte Silylenverbindungen IIIa, z.B. Dimethyldichlorsilan

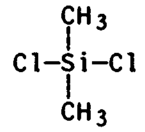

als Ausgangsmaterial benutzt, so wird die Umsetzung vorzugsweise in Gegenwart einer Hilfsbase ausgeführt, deren Aufgabe es ist, den im Zuge der Polykondensation gebildeten Halogenwasserstoff abzufangen. Dementsprechend können praktisch alle Arten von Basen, Mineralbasen als auch organische Basen, angewandt werden, bevorzugt werden aber im allgemeinen organische Basen und von diesen vorzugsweise Amine, insbesondere tertiäre Amine wie Trimethylamin, Triethylamin, Tripropylamin, Tributylamin, Trioctylamin, Benzyldimethylamin, Benzyldibutylamin, Dibutylbenzylamin usw. im erfindungsgemäßen Verfahren verwendet. Vorteilhaft können aber auch basische, organische Ionenaustauscher zu diesem Zweck eingesetzt werden, welche als basische Zentren vorzugsweise tertiäre Aminogruppen tragen. Die Art der dem organischen Ionenaustauscher zugrundeliegenden Polymermatrix ist für den Erfolg des Verfahrens im allgemeinen nicht kritisch.

Im Falle der Anwendung organischer als auch anorganischer Hilfsbasen werden diese üblicherweise in Mengen von 2 bis 4, vorzugsweise von 2 bis 2,5 mol pro Mol der betreffenden Dihalogensilanverbindung IIIa eingesetzt. Werden basische organische oder anorganische Ionenaustauscher, wie z.B. Hostarex® 1327 (Hoechst), Amberlite® LA2 (Rohm & Haas) oder Lewatit® M500 (Bayer) verwendet, so werden diese in Mengen von 2 bis 4, vorzugsweise von 2 bis 2,5 val/Mol der Dihalogenverbindung IIIa dem Reaktionsansatz zugeführt.

Selbstverständlich kann die Umsetzung von Poly-THF mit Dihalogensilanen auch in Abwesenheit einer Hilfsbase ausgeführt werden. Hierbei erweist es sich sich als vorteilhaft, den entstehenden Halogenwasserstoff aus dem organischen Reaktionsmedium zu strippen, beispielsweise indem man ein Inertgas, wie Stickstoff, durch die Reaktionsmischung leitet.

Die Herstellung der erfindungsgemäßen Verbindungen, ausgehend von Bis(dialkylamino)dialkylsilanen IIIc

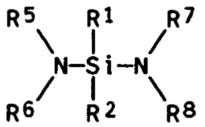

IIIc

in denen die Reste $R^5$ bis $R^8$ gleich oder verschieden sind und für eine $C_1$- bis $C_4$-Alkylgruppe stehen können oder in der jeweils die aliphatischen Reste $R^5$ und $R^6$ und/oder $R^7$ und $R^8$ gemeinsam mit dem Stickstoffatom einen 3- bis 6-gliedrigen Ring, beispielsweise einen Aziridin-, Pyrrolidin-, Morpholin- oder Piperidinring, bilden können, und Poly-THF wird vorzugsweise in Abwesenheit eines Katalysators durchgeführt. Besonders vorteilhaft können bei dieser Verfahrensweise die erfindungsgemäßen Verbindungen erzeugt werden, wenn das bei der Umsetzung freigesetzt Dialkylamin eine relativ leichtflüchtige Verbindung ist, die destillativ aus der Reaktionsmischung entfernt werden kann, wodurch das Gleichgewicht der Umsetzung auf die Seite der erfindungsgemäßen Verbindungen verschoben wird. Bis(dialkylamino)-dialkylsilane können aber auch vorteilhaft in Gegenwart eines sauer wirkenden Katalysators, beispielsweise einer aliphatischen oder aromatischen $C_1$- bis $C_{20}$-Carbon- oder Sulfonsäure, eines aciden, organischen Ionenaustauschers, beispielsweise eines solchen, dessen Polymermatrix Carboxyl- oder Sulfonsäuregruppen trägt, einer sauer wirkenden anorganischen Verbindungen, beispielsweise eines Zeolithen, einer Bleicherde, eines Montmorillonits oder sauren Aluminiumphosphats oder in Gegenwart von Mineralsäuren, wie Salz-, Schwefel- oder Phosphorsäure, mit Poly-THF zu den erfindungsgemäßen Poly-THF-Derivaten umgesetzt werden.

Ebenso wie Bis(dialkylamino)dialkylsilane können auch Bis(dialkoxy)dialkylsilane IIIb

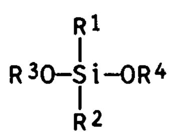

IIIb

mit Poly-THF in Gegenwart oder Abwesenheit eines sauren Katalysators umgesetzt werden, wobei praktisch die gleichen Sachverhalte gelten, wie sie im vorhergehenden Abschnitt dargelegt wurden, mit der Ausnahme, daß beim Einsatz dieser Ausgangsverbindungen vorzugsweise in Gegenwart eines sauren Katalysators gearbeitet wird. Wird bei der Herstellung der erfindungsgemäßen Verbindungen aus den Ausgangsverbindungen des Typs IIIb oder IIIc in Gegenwart eines sauren Katalysators gearbeitet, so gibt man diesen in der Regel in Mengen von 0,001 bis 5, vorzugsweise in Mengen von 0,01 bis 1 val/mol Siliciumverbindung zum Reaktionsgemisch.

Dialkyldihydrosilane IIId

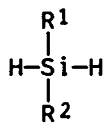

IIId

werden vorzugsweise in Anwesenheit eines Übergangsmetallkatalysators, vorzugsweise eines Übergangsmetallkatalysators aus der 8. Nebengruppe des Periodensystems, besonders bevorzugt eines Übergangsmetallkatalysators aus der Gruppe der Platinmetalle, mit Poly-THF umgesetzt, wobei diese Übergangsmetallkatalysatoren in der Regel in Form ihrer Komplexverbindungen, beispielsweise in Form ihrer Halogen-, Phosphin- oder Phosphit-Komplexe eingesetzt werden können. Beispielhaft für solche Komplexe seien die Hexachloroplatinsäure ($H_2PtCl_6$) oder das Tris(triphenylphosphino)rhodiumchlorid ($(Ph_3P)_3RhCl$) genannt.

Man setzt diese Katalysatoren üblicherweise in Mengen von $10^{-8}$ bis $10^{-1}$, vorzugsweise von $10^{-7}$ bis $10^{-2}$ mol pro Mol der betreffenden Silylenverbindungen IIId ein.

Das Poly-THF II wird in einem Molverhältnis Poly-THF II: Siliciumverbindung III von 1:1 bis 2:1 umgesetzt. Über die Einstellung dieses Molverhältnisses läßt sich die Kettenlänge des entstehenden Poly-THF-Derivates steuern. So erhält man beispielsweise bei Einstellung eines Poly-THF/Dichlordimethylsilan-Verhältnisses von 2:1 eine Verbindung I, welche zwei über eine Siloxibrücke verknüpfte Poly-THF-Einheiten enthält, wohingegen bei einem Molverhältnis von 7:6 ein Polymeres gebildet wird, das aus durchschnittlich mehr als 4 über eine Siloxibrücke verknüpften Poly-THF-Einheiten besteht.

Die Umsetzung der Silylenverbindungen III mit Poly-THF kann in Gegenwart oder in Abwesenheit von unter den Reaktionsbedingungen inerten Lösungsmitteln, wie Diethylether, Methyl-tert.-butyl-ether (MTBE), Tetrahydrofuran, Dioxan, Dimethylformamid, Toluol, Dichlormethan oder Chloroform ausgeführt werden. Die Anwesenheit von Lösungsmitteln kann sich insbesondere dann vorteilhaft auswirken, wenn die Reaktionsmischung nach beendeter Umsetzung filtriert werden soll, beispielsweise um heterogene Katalysatoren oder um bei der Umsetzung ausgefallene Salze abzutrennen.

Das Verfahren zur Herstellung der erfindungsgemäßen Poly-THF-Derivate kann diskontinuierlich in an sich herkömmlichen Reaktoren, wie Rührkesseln, oder kontinuierlich, beispielsweise mit Hilfe von Rührkesselkaskaden oder in Rohrreaktoren, durchgeführt werden. Werden Heterogenkatalysatoren, wie feste Ionenaustauscherharze oder Montmorillonite verwendet, wird deren Anordnung in einem Festbettreaktor bevorzugt, wobei dieser in der Sumpf- oder Rieselfahrweise betrieben werden kann. In der Regel wird im erfindungsgemäßen Verfahren eine Reaktionstemperatur von 0 bis 200 °C, vorzugsweise von 10 bis 170 °C und besonders bevorzugt von 20 bis 150 °C angewandt. Zweckmäßigerweise wird die Umsetzung bei Atmosphärendruck oder unter dem Eigendruck des Reaktionssystems betrieben, die Anwendung höherer Drücke ist ebenfalls möglich.

Die erfindungsgemäßen Poly-THF-Derivate sind bei Raumtemperatur flüssig und zeichnen sich durch eine relativ niedrige, kinematische Viskosität auch bei hohen mittleren Molekulargewichten aus. Beispielsweise beträgt die kinematische Viskosität eines auf Poly-THF 250 basierenden Siloxi-Poly-THF der mittleren Molmasse von 1240 Dalton bei 20 °C 971,4 mPa • s (gemessen mittels eines Ubbelohde-Viskosimeters), wohingegen Poly-THF 1000 bei dieser Temperatur als Feststoff vorliegt und vor seiner Verwendung im allgemeinen aufgeschmolzen werden muß. Dies führt aber zu einem erhöhten apparativen Aufwand bei der Herstellung von Polyurethan-Formkörpern, insbesondere bei Anwendung der Technik des reaction injection molding (RIM); (Lit.: Christopher W. Macosko: RIM-Fundamentals of Reaction Injection Moulding, Hanser Publishers, New York, 1989). Im Unterschied zu herkömmlichen Polytetrahydrofuranen sind die erfindungsgemäßen Poly-THF-Derivate, insbesondere bei solchen Anwendungen, besser handzuhaben.

Die vorliegende Erfindung betrifft weiterhin Polyurethane, welche die erfindungsgemäßen Poly-THF-Derivate als Diolkomponente enthalten.

Unter Polyurethanen werden Polyadditionsprodukte verstanden, welche durch die Reaktion von multifunktionellen Isocyanaten, beispielsweise Di- oder Triisocyanaten, mit mehrwertigen Alkoholen entstehen. Als Isocyanat-Bausteine für die Herstellung der erfindungsgemäßen Polyurethane können praktisch alle zur Polyurethanherstellung geeigneten aliphatischen, alicyclischen und aromatischen Di-, Tri- und Polyisocyanate, wie 1,6-Diisocyanatohexan, Isophoron-diisocyanat, trimeres Isophoron-diisocyanat und/oder trimeres Hexan-diisocyanat, Diisocyanatotoluol, Diisocyanatonaphthalin, 4,4'-Diisocyanato-diphenylmethan und dessen Stellungsisomere, urethanisiertes 4,4'-Diisocyanato-diphenylmethan, Polyphenyl-polymethylenpolyisocyanate, Isocyanatgruppen-haltige Addukte aus Toluoldiisocyanat und Trimethylolpropan und/oder Toluoldiisocyanat-trimer, verwendet werden.

Als Alkoholbausteine können zur Herstellung der erfindungsgemäßen Polyurethane neben den erfindungsgemäßen Poly-THF-Derivaten alle Diole, Triole und/oder Polyole verwendet werden, wie sie üblicherweise zur Herstellung von Polyurethanen benutzt werden. Beispiele für solche mehrwertigen Alkohole sind niedermolekulare, mehrwertige Alkohole, wie Ethylenglykol, Glycerin, 1,2-Propylenglykol, Trimethylolpropan, Pentaerythrit, Zuckeralkohole, Zucker und/oder Stärkehydrolysate, Polyetherpolyole, wie Polyoxyethylenpolyole, Polyoxypropylenpolyole, Polyoxyethylenglykol-polyoxypropylenpolyol-Misch- und/oder Blockpolymerisate, Polytetrahydrofurane, halogenierte Polyetherpolyole, Polyesterpolyole, beispielsweise solche auf Terephthalsäure-, Phthalsäure-, Isophthalsäure-, Hexahydrophthalsäure-, Bernsteinsäure- und/oder Adipinsäurebasis mit z.B. Ethylenglykol, 1,2-Propylenglykol, 1,4-Butandiol, 1,6-Hexandiol, Neopentylglykol, Thiodiglykol, Hydroxypivalinsäure, Hydroxypivalinsäureneopentylglykolester, Glycerin, Trimethylolpropan und/oder Hexantriol als Alkoholkomponente sowie Polycarbonatpolyole, welche z.B. durch Umestern von Dialkyl- oder Diarylcarbonaten mit Diolen und Triolen erhältlich sind. Selbstverständlich können anstelle der Diole auch die analog reagierenden Thiole eingesetzt werden.

Als weitere Bausteine zur Herstellung der erfindungsgemäßen Polyurethane können Diamine dienen, deren Verwendung bei der Polyurethan-Herstellung zu sogenannten Hybridsystemen führt, in denen Polyurethan-Einheiten über Harnstoffbrücken miteinander verbunden sind. Beispiele für derartige Diamine sind Diethyltoluylendiamin, 4,4'-Diamino-3,3'-dichlor-diphenylmethan, 3,5-Diamino-4-chlorbenzoesäureisobutylester, Methylen-bis-anthranilsäure-methylester, Ethylendiamin, 1-Amino-3-aminomethyl-3,5,5-trimethylcyclohexan (Isophorondiamin), Hexamethylendiamin und/oder Hydrazin.

Weiterhin können bei der Herstellung der erfindungsgemäßen Polyurethane praktisch alle Arten der üblicherweise bei Polyurethanen eingesetzten Schaum-Stabilisatoren, Hydrolyse-Stabilisatoren, Oxidations-Stabilisatoren UV-Stabilisatoren als auch Additive, wie Treibmittel, Flammschutzmittel, Farbstoffe, Füllstoffe und Verstärkungsmittel, insbesondere Glasfasern, zugemischt werden.

Die erfindungsgemäßen Polyurethane können unter Verwendung der üblicherweise zur Herstellung von Polyurethanen eingesetzten Katalysatoren oder Katalysatorsysteme erzeugt werden. Dazu können sowohl Lewis-Basen als auch Lewis-Säuren oder Mischungen dieser Katalysatoren Anwendung finden. Beispiele für geeignete Lewis-Basen sind Diazabicyclooctan, Dimethylbenzylamin, Bis-dimethylaminomethylether, Tetramethylguanidin und Bis-dimethylaminomethyl-phenol. Vorteilhaft verwendbare Lewis-Säuren sind beispielsweise Zinn-diethylhexoate, Dibutylzinn-dilaurat, Dibutylzinn-bis-dodecylmercaptid und Blei-phenyl-ethyl-dithiocarbaminat.

Die Herstellung der erfindungsgemäßen Polyurethane kann nach den an sich herkömmlichen Verfahren der Polyurethan-Herstellung, beispielsweise durch Zusammenmischen der reaktiven Komponenten, erfolgen. Dabei kann beispielsweise nach dem RIM-Verfahren unter Anwendung der Hochdruck- oder Niederdruck-Vermischung gearbeitet werden.

Die erfindungsgemäßen Polyurethane können die erfindungsgemäßen Poly-THF-Derivate in Mengenverhältnissen von 5 bis 80, vorzugsweise von 5 bis 20 und besonders bevorzugt von 5 bis 10 Gew.-%, bezogen auf die darin enthaltene Polyolkomponente, enthalten.

Die erfindungsgemäßen Polyurethane haben bei ansonsten gleichartigen und gleichwertigen Eigenschaften gegenüber herkömmlichen Polyurethanen den Vorteil, daß daraus bestehende Polyurethanformkörper wesentlich leichter aus den Metallformen der Spritzgußmaschinen abgetrennt werden können, weshalb auf den Einsatz zusätzlicher Trennmittel, wie Silikonöle oder Wachse, gänzlich verzichtet oder deren Verwendung zumindest eingeschränkt werden kann. Dies führt zu einer beträchtlichen Vereinfachung des Verfahrens der Polyurethan-Formkörperherstellung, da ein zusätzlicher Arbeitsgang, nämlich die wiederholte Beschichtung der Spritzgußformen mit Trennmittel, eingespart werden kann. Des weiteren kann bei Verwendung der erfindungsgemäßen Polymere die Zugabe von inneren Trennmitteln, d.h. von Additiven, die zur Verbesserung der Abtrennbarkeit der Polyurethan-Formkörper aus der Spritzgußform der Polyurethan-Reaktionsmasse zugesetzt werden, unterbleiben. Dies kommt einer Verbesserung der Produkteigenschaften der Polyurethan-Formkörper gleich, da solche Additive in der Regel mit der Zeit aus dem Polyurethan-Formkörper an dessen Oberfläche diffundieren, was im allgemeinen unerwünscht ist.

Beispiele:

Das mittlere Molekulargewicht $\overline{MG}$ wurde bei den erfindungsgemäßen Poly-THF-Derivaten osmometrisch bestimmt.

Die OH-Zahl der erfindungsgemäßen Poly-THF-Derivate wurde durch die Acetylierung dieser Verbindungen mit dem System Pyridin/Acetanhydrid/Diazabicyclooctan und die anschließende Titration des angewandten Acetanhydrid-Überschusses mittels wäßriger Alkalihydroxidlösung bestimmt. Die Dimension der OH-Zahl ist mg KOH/g Substanz.

Der Siliciumgehalt der erfindungsgemäßen Poly-THF-Derivate wurde nach deren Naßveraschung mit konzentrierter Schwefelsäure, und dem Natriumcarbonat/Borax-Aufschluß der dabei entstandenen Kieselsäuren atomemissionsspektrometrisch bestimmt.

Alle Umsetzungen zur Herstellung der Siloxi-Polytetrahydrofurane wurden in einer Inertgasatmosphäre ausgeführt.

Beispiel 1:

Darstellung von Bis-poly-THF-dimethylsiloxan aus Poly-THF 250 und Dimethyldichlorsilan.

In einem 500-ml-Rührkolben wurden 58,0 g Poly-THF 250 (0,25 mol) in 150 ml MTBE und 27,8 g (0,275 mol) Triethylamin vorgelegt.

Unter stetem Rühren und bei einer Innentemperatur von 25 bis 28 °C wurden zu dieser Lösung 16,13 g (0,125 mol) Dimethyldichlorsilan in 100 ml MTBE innerhalb von 1,5 h zugetropft. Nach beendeter Zugabe wurde noch 2 h bei 50 °C weitergerührt und die Reaktionslösung zur Abtrennung ausgefallener Triethylammoniumsalze filtriert. Nach Abdestillieren des Lösungsmittels wurde das gewünschte Produkt in Form eines hellen Öls erhalten.

Analysen:

Si-Gehalt: 5,9 Gew.-%
OH-Zahl: 252
$\overline{MG}$: 444
Cl-Gehalt: < 0,5 Gew.-%

Beispiel 2:

Darstellung von Bis-poly-THF-dimethylsiloxan aus Poly-THF 1000 und Dimethyldichlorsilan

Es wurden analog Beispiel 1 250,0 g Poly-THF 1000 (0,25 mol) umgesetzt. Als Lösungsmittel diente THF.

Analysen:

Si-Gehalt: 1,2 Gew.-%
OH-Zahl: 56
$\overline{MG}$: 2000
Cl-Gehalt: < 0,5 Gew.-%

Beispiel 3:

Darstellung von Bis-poly-THF-methylvinylsilan aus Poly-THF 250 und Methylvinyldichlorsilan

Es wurde wie in Beispiel 1 verfahren und anstelle des Dimethylchlorsilans 17,63 g (0,125 mol) Methylvinyldichlorsilan umgesetzt.

Analysen:

Si-Gehalt: 4,7 Gew.-%
OH-Zahl: 175

$\overline{MG}$: 640
Cl-Gehalt: < 0,5 Gew.-%

$^1$H-Kernresonanzspektrum (NMR) ($CDCl_3$):

$\delta$ 6,0 (m, Vinyl-H); 3,7 (t, Si-O-$CH_2$); 3,65 (m, HO-$\underline{CH_2}$); 3,4 (m, Polyether); 2,8 (s, OH); 1,6 (m, Polyether); 0,2 (s, $CH_3Si$)

Beispiel 4:

Darstellung von Bis-poly-THF-methylphenylsilan aus Poly-THF 250 und Methylphenyldichlorsilan

Es wurde wie in Beispiel 1 gearbeitet und 23,9 g (0,125 mol) Methylphenyldichlorsilan eingesetzt.

Analysen:

Si-Gehalt: 4,2 Gew.-%
OH-Zahl: 162
$\overline{MG}$: 690
Cl-Gehalt: < 0,5 Gew.-%

Beispiel 5:

Darstellung von Polysiloxi-Polytetrahydrofuran aus Poly-THF 250 und Dimethyldichlorsilan (Molverhältnis 4:3)

In der Apparatur von Beispiel 1 wurden 58,0 g (0,25 mol) Poly-THF 250 in 250 ml MTBE und 27,8 g (0,275 mol) Triethylamin vorgelegt. Bei einer Innentemperatur von 25 bis 28 °C wurden 24,5 g (0,19 mol) Dimethyldichlorsilan innerhalb 1,5 h zugetropft und anschließend noch 2 h bei 50 °C gerührt. Das Lösungsmittel wurde abdestilliert und das Produkt als helles Öl erhalten.

Analysen:

Si-Gehalt: 6,5 Gew.-%
OH-Zahl: 173
$\overline{MG}$: 650
Cl-Gehalt: < 0,5 Gew.-%

Beispiel 6:

Darstellung von Polysiloxi-Poly-Tetrahydrofuran aus Poly-THF 250 und Dimethyldichlorsilan (Molverhältnis 7:6)

In einem 50 l-Email-Rührkessel wurden 4,5 kg Poly-THF 250 (19,332 mol), 3,7 kg (36,535 mol) Triethylamin und 15 l MTBE vorgelegt. Unter Rühren wurden bei 18 bis 28 °C Innentemperatur 2,14 kg (16,589 mol) Dimethyldichlorsilan gelöst in 2 l MTBE innerhalb von 3 h der Reaktionsmischung zugeführt. Es wurden nochmals 3 l MTBE zugegeben und die Reaktionsmischung weitere 2 h bei 50 °C gerührt. Die ausgefallenen Ammoniumsalze wurden über eine Druckfilternutsche abfiltiert und das Lösungsmittel aus dem Filtrat abdestilliert. Es wurden 5,4 kg eines gelben Öls erhalten.

Analysen:

Si-Gehalt: 7,4 Gew.-%
OH-Zahl: 106
$\overline{MG}$: 1240
Cl-Gehalt: 0,5 Gew.-%
$^1$H-NMR ($CDCl_3$):
$\delta$ (ppm): 3,7 (m, Si-O-$CH_2$); 3,65 (m, HO-$\underline{CH_2}$); 3,4 (m, Polyether); 2,6 (s, OH); 1,6 (m, Polyether); 0,2 (-

$(CH_3)_2Si)$

Beispiel 7:

Polysiloxi-Polytetrahydrofuran der Molmasse 5300

In einer 2 l-Rührapparatur wurden 500 g (0,5 mol) Poly-THF 1000, 500 ml MTBE und 95,4 g (0,943 mol) Triethylamin vorgelegt. Zu dieser Mischung wurden während eines Zeitraums von 5 h und bei einer Temperatur von 25 bis 30 ° C 55,3 g Dimethyldichlorsilan (0,429 mol) zugetropft und anschließend weitere 700 ml MTBE hinzugefügt. Nach beendeter Zugabe wurde nochmals 3 h gerührt und ausgefallene Ammoniumsalze abfiltriert. Aus den Filtraten wurde das Lösungsmittel abdestilliert. Es wurden 533,8 g (100 % Ausbeute) eines farblosen Öls erhalten, das auch nach vierwöchiger Lagerung bei Raumtemperatur noch flüssig war.

Analysen:

Si-Gehalt: 2,1 Gew.-%
OH-Zahl: 25
$\overline{MG}$: 5300

Beispiel 8:

Herstellung von Polysiloxi-Polytetrahydrofuran aus Poly-THF 650 und Dimethyl-bis-(dimethylamino)silan

In einer 250 ml-Rührapparatur wurden 65,0 g Poly-THF 650 (0,1 mol), 9,7 g Dimethyl-bis-(dimethylamino)silan (0,067 mol) und 50 ml Chlorbenzol miteinander vermischt und 5 h unter Rückfluß erhitzt. Dabei entwich Dimethylamin. Nach beendeter Reaktion wurde das Lösungsmittel Chlorbenzol abdestilliert, wobei 68,3 g (100 % Ausbeute) eines schwach gelblichen Öls zurückblieben.

Analysen:

Si-Gehalt: 2,7 Gew.-%
OH-Zahl: 54
$\overline{MG}$: 2000

Beispiel 9:

Herstellung von Polysiloxi-Polytetrahydrofuran aus Poly-THF 650 und Dimethyldihydrosilan

In einer 250 ml-Rührapparatur wurden 65,0 g Poly-THF 650 (0,1 mol), 4,0 g (0,067 mol) Dimethyldihydrosilan, 100 ml THF und 10 mg $H_2PtCl_6 \cdot 6H_2O$(Hexachloroplatinsäure) in 0,5 ml Butanol miteinander vermischt und auf 50 ° C erwärmt. Unter diesen Bedingungen trat eine Wasserstoffentwicklung ein. Nach beendeter Wasserstoffentwicklung wurde die Reaktion abgebrochen und das Lösungsmittel abdestilliert. Es wurden 68,0 g (100 % Ausbeute) eines hellen Öls erhalten.

Analysen:

Si-Gehalt: 2,6 Gew.-%
OH-Zahl: 58
$\overline{MG}$: 1950

Beispiel 10:

Herstellung von Polysiloxi-Polytetrahydrofuran aus Polytetrahydrofuran 1000 und Dimethyl-bis-methoxysilan

In einer 2 l-Rührapparatur wurden 500 g (0,5 mol) Poly-THF 1000, 500 ml Toluol, 5,0 g Pivalinsäure und 51,5 g (0,429 mol) Dimethyl-bis-methoxysilan 5 h unter Rückfluß erhitzt und anschließend das Lösungsmittel Toluol und das neu gebildete Methanol abdestilliert. Der Rückstand wurde erneut in 500 ml Toluol gelöst

und zur Entfernung der restlichen Carbonsäure mit 500 ml wäßriger 10 gew.-%iger Natriumhydrogencarbonat-Lösung extrahiert. Die organische Phase wurde von Wasser befreit und das Lösungsmittel abdestilliert. Es wurden 510,9 g (97,5 % Ausbeute) eines farblosen Öls erhalten, das auch nach zwölfwöchiger Lagerung bei Raumtemperatur noch flüssig war.

Analysen:

Si-Gehalt: 2,2 Gew.-%
OH-Zahl: 23
$\overline{MG}$: 5000

Beispiel 11:

Herstellung eines erfindungsgemäßen Polyurethans

Zur Herstellung von erfindungsgemäßen Polyurethanen wurden die Komponenten A und B im Mischungsverhältnis (w/w) 100(A):39,7(B) miteinander vermischt und unmittelbar nach ihrer Vermischung in Spritzgußformen eingepreßt.

Komponente A hatte die Zusammensetzung:

| | |
|---|---|
| 49,7 Gew.-% | Lupranol® 2042 (Block-copolymeres Polyethertriol mit einer Hydroxylzahl von 2,7 auf der Basis von Trimethylolpropan, 1,2-Propylenoxid und Ethylenoxid) |
| 14.41 Gew.-% | Diethyltoluylendiamin (Isomerengemisch) |
| 7,21 Gew.-% | Dimethylsiloxi-Polytetrahydrofuran auf Basis von Poly-THF 250; $\overline{MG}$ 1070 Dalton |
| 0,72 Gew.-% | 30 gew.-%ige Lösung von Diazabicyclooctan in Propylenglykol |
| 0,14 Gew.-% | Dibutylzinn-dilaurat |
| 27,9 Gew.-% | gemahlene Glasfasern |

Komponente B war ein Isocyanat-Präpolymer, das durch die Umsetzung von Diphenylmethandiisocyanat mit einer Mischung aus Polypropylenoxiddiol (mittleres Molekulargewicht: 450 Dalton) und Dipropylenglykol hergestellt worden war und das einen Gehalt an freien Isocyanatgruppen von 23 Gew.-% hatte.

Die auf diese Weise hergestellten Polyurethan-Prüfplatten hatten das Format DIN A4.

Zum Vergleich wurden Prüfplatten nach einer Vergleichsrezeptur produziert, die 7,21 Gew.-% Poly-THF 1000 anstelle des erfindungsgemäßen Siloxi-Polytetrahydrofurans bei ansonsten gleicher Zusammensetzung enthielt.

Ergebnis der mechanischen Prüfungen:

Bei der mechanischen Prüfung konnten keine Unterschiede zwischen den erfindungsgemäß hergestellten Polyurethan-Platten und den Vergleichsplatten betreffend die folgenden Eigenschaften festgestellt werden: Reißfestigkeit, Weiterreißfestigkeit, Reißdehnung, Biege-Elastizitätsmodul.

Die erfindungsgemäßen Polyurethan-Platten ließen sich jedoch wesentlich leichter als die Vergleichsplatten aus den Spritzgußformen abtrennen, weshalb auf den Einsatz eines zusätzlichen Trennmittels bei den erfindungsgemäßen Platten verzichtet werden konnte.

## Patentansprüche

**1.** Siloxi-Poly-Tetrahydrofurane der Formel I

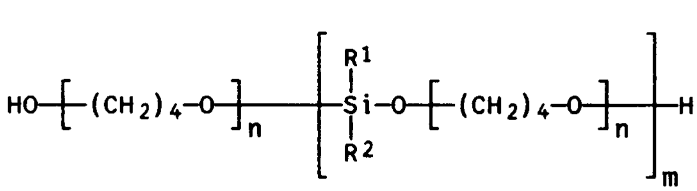

I

in der die Reste $R^1$ und $R^2$ gleich oder verschieden sind und für eine $C_1$- bis $C_{10}$-Alkylgruppe, eine $C_2$-

bis $C_{10}$-Alkenylgruppe, eine $C_1$- bis $C_{10}$-Halogenalkylgruppe, eine $C_1$- $C_{10}$-Aminoalkylgruppe, eine $C_1$- bis $C_{10}$-Hydroxyalkylgruppe, eine $C_6$- bis $C_{10}$-Arylgruppe, eine $C_7$- bis $C_{12}$-Aralkylgruppe und/oder eine $C_1$- bis $C_{10}$-Alkoxygruppe stehen, der Index n eine ganze Zahl von 2 bis 150 und der Index m eine ganze Zahl von 1 bis 500 ist.

**2.** Verfahren zur Herstellung von Siloxi-Polytetrahydrofuranen der Formel I

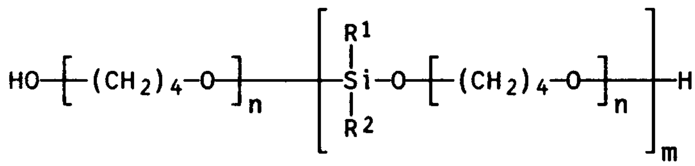

I

in der die Reste $R^1$ und $R^2$ sowie die Indices n und m die in Anspruch 1 genannte Bedeutung haben, dadurch gekennzeichnet, daß man Polytetrahydrofuran der allgemeinen Formel II

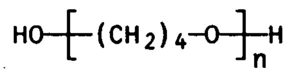

II

mit einer Siliciumverbindung der allgemeinen Formel III

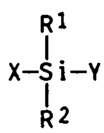

III,

in der die Gruppen X und Y gleich oder verschieden sind und für ein Wasserstoffatom, ein Halogenatom, eine $C_1$- bis $C_4$-Alkoxygruppe und/oder eine $C_2$- bis $C_8$-Dialkylaminogruppe stehen, in An- oder Abwesenheit eines Katalysators umsetzt und dabei ein Molverhältnis von Polytetrahydrofuran II:Siliciumverbindung III von 1:1 bis 2:1 anwendet.

**3.** Verfahren nach Anspruch 2, dadurch gekennzeichnet, daß man als Siliciumverbindung III ein Dihalogensilan der Formel IIIa

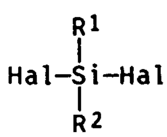

IIIa

verwendet, in der Hal für ein Fluor, Chlor- und/oder Bromatom steht, und die Umsetzung in Gegenwart eines tertiären Amins durchführt.

**4.** Verfahren nach Anspruch 2, dadurch gekennzeichnet, daß man als Siliciumverbindung III ein Dialkoxysilan der Formel IIIb

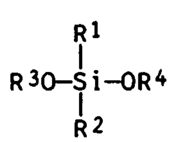

IIIb

verwendet und der Rest $R^3$ und $R^4$ gleich oder verschieden sind und für $C_1$- bis $C_4$-Alkylgruppen stehen.

**5.** Verfahren nach Anspruch 2, dadurch gekennzeichnet, daß man als Siliciumverbindung III ein Bis-dialkylamino-silan der Formel IIIc

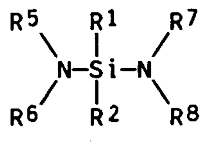

IIIc

verwendet, in der die Reste $R^5$ bis $R^8$ gleich oder verschieden sind und für eine $C_1$- bis $C_4$-Alkylgruppe stehen, oder in der jeweils die aliphatischen Reste $R^5$ und $R^6$ und/oder $R^7$ und $R^8$ gemeinsam mit dem Stickstoffatom einen 3- bis 6-gliedrigen Ring bilden können.

**6.** Verfahren nach Anspruch 2, dadurch gekennzeichnet, daß man als Siliciumverbindung III ein Dialkyldihydrosilan der Formel IIId

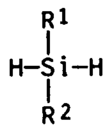

IIId

verwendet.

**7.** Polyurethane, aufgebaut aus Diisocyanaten und Diolen und gegebenenfalls Diaminen, enthaltend als Diol-Baustein Gruppen der Formel Ia

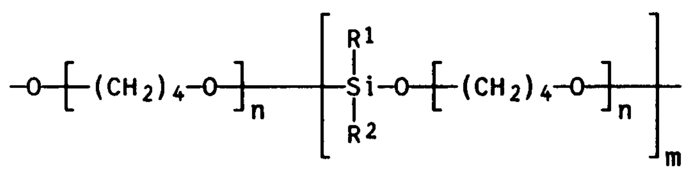

Ia

in der die Reste $R^1$ und $R^2$ sowie die Indices n und m die in Anspruch 1 genannte Bedeutung haben.